# EUROPEAN PATENT SPECIFICATION

(11) **EP 0 961 061 B1**
(45) Date of publication and mention of the grant of the patent: **26.05.2004**
(21) Application number: 99103035.4
(22) Date of filing: 16.02.1999
(51) Int. Cl.: F16K 24/04

(54) **Improved automatic bleeding valve for hydraulic systems**
Selbsttätiges Entlüftungsventil für hydraulische Anlagen
Soupape de purge automatique pour systèmes hydrauliques

(30) Priority: 27.05.1998 IT TO980454
(43) Date of publication of application: 01.12.1999
(73) Proprietor: Famfer S.N.C. Di Riccardo Ferrero & C., 12060 Farigliano (CN) (IT)
(72) Inventor: Ferrero, Riccardo, 12060 Farigliano (Cuneo) (IT)
(74) Representative: Robba, Pierpaolo

(56) References cited:
- DE-A- 2 235 161
- DE-A- 2 714 118
- FR-A- 774 492
- FR-A- 775 296
- US-A- 4 927 114

## Description

The present invention relates to an automatic bleeding valve for hydraulic systems such as hot-water heating systems by thermosiphon circulation and the like, particularly for large airflow systems.

As it is known in hydraulic systems where a (usually hot) fluid circulates, for achieving an optimum operation of the system all traces of air are to be removed.

A convenient and known way to achieve the above result is to install a bleeding valve, either manually or automatically operated, at the highest point of the system. The valves of this type comprise a floating member that rests into a seat and causes an automatic air discharge when the floating member is no longer in contact with the water.

DE 2235161 discloses an automatic bleeding valve for hydraulic systems particularly for large air flow systems, comprising an outer body, a float movable inside said body and provided with a valve head member adapted to automatically open and close a bleeding opening when said float is respectively lowered or lifted, a cover fixed to said body with an interposed sealing gasket therebetween, said member being sealingly urged against a toric gasket by a spring, and a plug housed in the cover.

FR 774492 discloses an air discharge device wherein the movements of a valve adapted to close a bleeding opening are controlled by an oscillating lever supporting at its both respective extremities two masses having different volumes and densities.

FR 775296 describes an air discharge device of the type comprising a valve, the opening and the closure of said valve being provoked respectively by the lowering or by the lifting of the level of liquid inside a conduit, wherein the vertical movements of the valve are controlled by two counter-acting forces, one of which, obtained by means of a spring, remains constant, while the other force depends on the action of a weight.

DE 2714118 describes a bleeding valve comprising a cylindrical housing and a float inside said housing, wherein the housing is mounted on a seat at the inside of which a plug valve is inserted.

US 4,927,114 describes a tilt valve cartridge for a pneumatic mechanism which has a cylindrical housing having two open ends, an annular valve seat secured in one open end, a valve member in tiltable contact with the annular seat and having a valve stem which extends through the valve seat and protrudes from the end of the cylinder, a spring to hold the valve member in a normally closed relationship with the valve seat, a sealing element secured to the cylindrical housing on its exterior surface so as to seal the interface between the cartridge and the mechanism, and retention feature to capture the valve member and valve biasing spring within the cylindrical cartridge.

However in systems with large flow rates and high pressures of the air to be ejected, the outcoming air jet directly strikes and lifts the float, thus closing the passage even when all the air has not been completely ejected and the float is in contact with water.

The invention aims to solve the above mentioned problem and to provide an automatic valve of the float type that achieves the following advantages over the presently used valves:
a reduced size;
a correct operation with large air flow rates;
a simple construction;
a strongly limited cost;
an improved reliability due to the absence of kinematic devices that might easily be blocked by the limestone present in hard waters at many locations.

The novel characteristics of the bleeding valve according to the invention will become evident from the characterizing portion of the claims.

The invention will now be disclosed with details with reference to the attached drawings, supplied only for exemplary and non limiting purposes, in which:

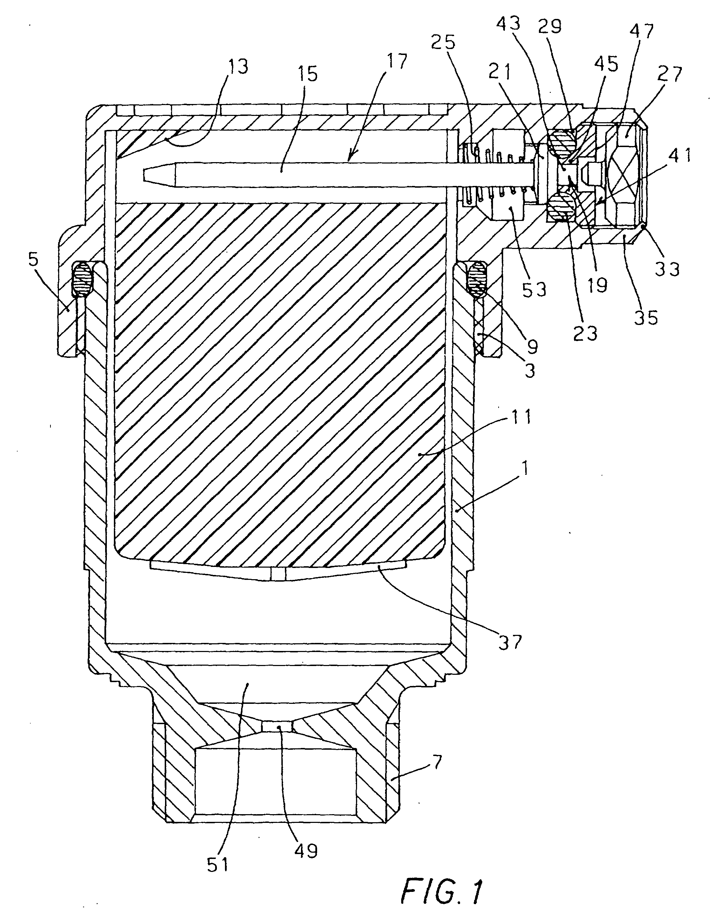

Fig. 1 is a longitudinal cross sectional view of a device according to the invention in the automatic operation mode with the float in a lifted position (closed device);

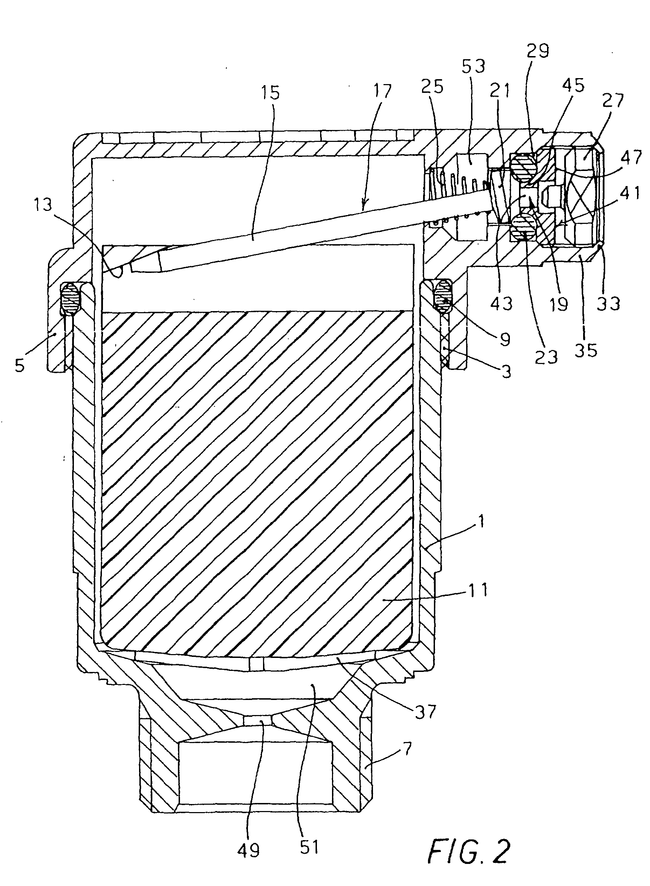

Fig. 2 is a longitudinal cross sectional view of a device according to the invention in the automatic operation mode with the float in a lowered position (open device);

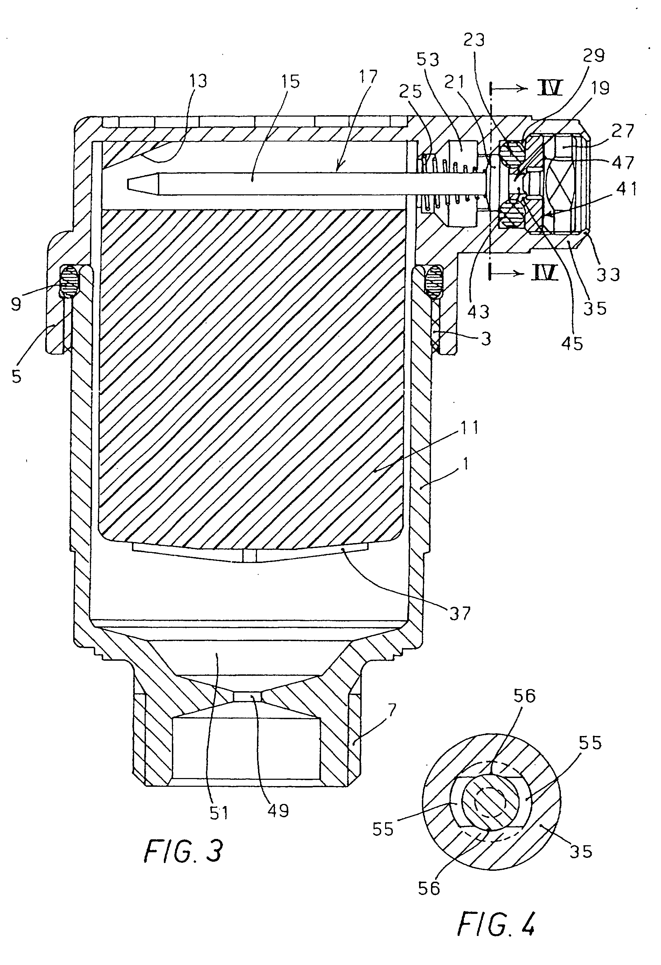

Fig. 3 is a longitudinal cross sectional view of a device according to the invention in the manual operating mode (closed device);
Fig. 4 is a cross sectional view along line IV-IV of Fig. 3 illustrating the valve head and seat.

As shown in the Figures, a bleeding valve according to the invention substantially comprises: an outer cylindrically shaped body 1, having a threaded upper end 3 for securing a circular cover 5 which is equipped with a radial bleeding spout 35, and a threaded lower end 7 for securing the body 1 to the system, a sealing gasket 9 being interposed between the cover 5 and the outer body 1. A float 11 is movable inside the body 1 and has an inclined surface 13 for acting onto a stem 15 of a valve head member 17 for automatically opening and closing a bleeding orifice or opening 19 in the cover when the float 11 is lowered or lifted respectively, the stem 15 terminating with an enlarged portion 21 for sealingly abutting against a toric gasket or "O ring" 23. A return spring 25, usually a conical spring, urges the member 17 against said toric gasket 23. A plug 27 is housed in said cover 5 and allows for the automatic operation of the bleeding valve when the plug is unscrewed, or sets the bleeding valve to the manual operation mode when it is screwed and occludes the opening 19.

The sealing member or toric gasket 23 is common to both the automatic and the manual operating mode and such annular gasket is received in a groove 29 formed in the cover 5 and maintained therein without any dedicated fastening means. The end portion of the outlet opening is provided with an inwardly projecting caulked rim 33 to prevent the plug 27 from falling out of the cover after it has been loosened to enable the automatic operating mode. The plug 27 is flush in a seat of the bleeding spout 35, so that no component protrudes from the cover 5 besides the spout 35. The automatic system for closing and opening the valve is housed in the bleeding spout 35, whereby the full volume of the body 1 is free for housing the movable float 11. A plurality of fins 37 is provided on the bottom surface of the float 11 for better conveying the air towards the exhaust or bleeding opening.

The lower end 7 of the body 1 is provided with a calibrated (gauged) hole 49 for air inlet and such hole opens into (communicates with) a first air expansion chamber 51.

Upstream of the opening 19, in the bleeding spout 35 a second expansion chamber 53 is formed, with two facing recesses 55 in correspondence of the enlarged portion 21, these recesses assisting the air outlet, and with two facing guides 56 shaped like circle arcs, and acting as guide members for the head of the valve enlarged portion 21.

Moreover downstream of said toric gasket 23, towards the closing plug 27, a sealing annular gasket 41 is positioned, having a cross section shaped like a horizontal T, the stem 43 of which has a calibrated hole 45 for allowing the air passage. The plug 27, when screwed for the manual closure, abuts against the head 47 of the sealing gasket 41 downstream of the toric gasket (O ring) 23.

Numeral reference 57 indicates two notches formed in the head of plug 27, through which the air escapes from the valve when the plug is open, both in the automatic and manual operating mode.

## Claims

1. An automatic bleeding valve for hydraulic systems particularly for large air flow systems, substantially comprising: an outer body (1) having an uppe (3) and a lower threaded end (7), said body being securable to said system through said lower threaded end (7); a float (11) movable inside said body (1) and provided with an inclined surface (13) for acting onto a stem (15) of a valve head member (17) adapted to automatically open and close a bleeding opening (19), when said float (11) is lowered or lifted, respectively; a cover (5) fixed to said body through said upper threaded end (3) with an interposed sealing gasket (9) therebetween, said member (17) being sealingly urged against a toric gasket (23) by a spring (25); a plug (27) housed in said cover (5) for allowing an automatic operating of said bleeding valve when the plug is unscrewed, and the manual operation of the bleeding valve when the plug is screwed, **characterized in that** - upstream of said bleeding opening (19) - a bleeding spout (35) is provided with an air expansion chamber (53), and in correspondence of an enlarged portion (21) of said valve member (17), said bleeding spout (35) is provided with two facing recesses (55) assisting the air outlet and with two facing guides (56) shaped like arcs of circles and acting as guides for said enlarged portion (21) of the valve head member.

2. An automatic bleeding valve for hydraulic systems according to claim 1 **characterized in that** the lower end (7) of said body (1) is provided with a calibrated hole (49) for air inlet that communicates with a further air expansion chamber (51).

3. An automatic bleeding valve for hydraulic systems as claimed in claims 1 and/or 2, **characterized in that** downstream of said toric gasket (23), towards said closing plug (27), a sealing annular gasket (41) is disposed having a cross section shaped like a horizontal T, the stem (43) of said toric gasket (23) has a calibrated hole (45) for allowing the air passage, and said closing plug (27) - when screwed for the manual closure - abuts against the head (47) of said sealing gasket (41) downstream of said toric gasket (23).

4. An automatic bleeding valve as claimed in claim 3, **characterized in that** said toric gasket (23) is received in a groove (29) of the cover (5) and maintained therein without any dedicated fastening means.

5. An automatic bleeding valve as claimed in claim 3, **characterized in that** the end of said bleeding spout is provided with an inwardly projecting rim (33) that is caulked to prevent said plug (27) from coming out of said spout after said plug has been loosened for the automatic operation of the valve.

6. An automatic bleeding valve as claimed in claim 3, **characterized in that** a plurality of fins (37) are provided on the bottom surface of said float (11) for better conveying the air towards the bleeding opening.

7. An automatic bleeding valve as claimed in claim 3, **characterized in that** said sealing gasket (41) is inserted or screwed in a suitable seat.

8. An automatic bleeding valve as claimed in claim 3, **characterized in that** upstream of the recess housing said toric gaske (23) there is provided said air expansion chamber (53) provided in the bleeding spout (35).

9. An automatic bleeding valve as claimed in claim 7, **characterized in that** said sealing member (23) is a rubber gasket of toric or flat configuration.

10. An automatic bleeding valve as claimed in any claims 4 to 8, **characterized in that** the groove (29) in which said sealing member (23) is inserted has a different shape from a toric or flat shape, e.g. a "dovetail" shape, for an improved retaining of said sealing member under high pressure conditions.

## Patentansprüche

1. Selbsttätiges Entlüftungsventil für hydraulische Systeme, insbesondere für Systeme für einen großen Luftstrom, wobei das Ventil im Wesentlichen
- ein äußeres Gehäuse (1) das ein oberes Gewindeende (3) und ein unteres Gewindeende (7) hat und an dem System mit dem unteren Gewindeende (7) festlegbar ist,
- einen Schwimmer (11), der innerhalb des Gehäuses (1) bewegbar ist und mit einer geneigten Fläche (13) zum Wirken auf einen Schaft (15) eines Ventilkopfelements (17) vorgesehen ist, das für ein selbsttätiges Öffnen und Schließen einer Entlüftungsöffnung (19) ausgelegt ist, wenn der Schwimmer (11) jeweils abgesenkt oder angehoben wird,
- einen Deckel (5), der an dem Gehäuse mit dem oberen Gewindeende (3) mit einer dazwischen angeordneten Dichtung (9) befestigt ist, wobei das Element (17) durch eine Feder (25) abdichtend gegen eine Ringdichtung (23) gedrückt wird, und
- einen in dem Deckel aufgenommenen Stopfen (27) aufweist, der eine automatische Betätigung des Entlüftungsventils, wenn der Stopfen abgeschraubt ist, und die Handbetätigung des Entlüftungsventils ermöglicht, wenn der Stopfen eingeschraubt ist,
**dadurch gekennzeichnet,**
- **dass** - stromauf von der Entlüftungsöffnung (19) - eine Entlüftungstülle (35) mit einer Luftexpansionskammer (53) vorgesehen ist, und
- **dass** in Übereinstimmung mit einem erweiterten Abschnitt (21) des Ventilelements (17) die Lüftungstülle (35) mit zwei einander zugewandten, den Luftauslass unterstützenden Aussparungen (55) und mit zwei einander zugewandten Führungen (56) versehen ist, die wie Kreisbögen geformt sind und als Führungen für den erweiterten Abschnitt (21) des Ventilkopfelements wirken.

2. Selbsttätiges Lüftungsventil für hydraulische Systeme nach Anspruch 1, **dadurch gekennzeichnet, dass** das untere Ende (7) des Gehäuses (1) mit einem kalibrierten Loch (49) für den Lufteinlass versehen ist, das mit einer weiteren Luftexpansionskammer (51) in Verbindung steht.

3. Selbsttätiges Entüftungsventil für hydraulische Systeme nach Anspruch 1 und/oder 2, **dadurch gekennzeichnet, dass** stromab von der Ringdichtung (23) zum schließenden Stopfen (27) hin eine ringförmige Dichtung (41) angeordnet ist, die einen Querschnitt in Form eines horizontalen T hat, wobei der Schaft (43) der Ringdichtung (23) ein kalibriertes Loch (45) hat, das den Luftdurchgang ermöglicht, und der schließende Stopfen (27), wenn er für ein manuelles Schließen eingeschraubt ist, an dem Kopf (47) der Dichtung (41) stromab von der Ringdichtung (43) anliegt.

4. Selbsttätiges Entlüftungsventil nach Anspruch 3, **dadurch gekennzeichnet, dass** die Ringdichtung (23) in einer Nut (29) des Deckels (5) aufgenommen und darin ohne irgendeine spezielle Befestigungseinrichtung gehalten ist.

5. Selbsttätiges Entlüftungsventil nach Anspruch 3, **dadurch gekennzeichnet, dass** das Ende der Entlüftungstülle mit einem nach innen vorstehenden Rand (33) versehen ist, der verstemmt ist, um zu verhindern, dass der Stopfen (27) von der Tülle freikommt, wenn er für den automatischen Betrieb des Ventils gelöst worden ist.

6. Selbsttätiges Entlüftungsventil nach Anspruch 3, **dadurch gekennzeichnet, dass** an der Bodenfläche des Schwimmers (11) eine Vielzahl von Rippen (37) zum besseren Fördern der Luft zu der Entlüftungsöffnung hin vorgesehen ist.

7. Selbsttätiges Entlüftungsventil nach Anspruch 3, **dadurch gekennzeichnet, dass** die Dichtung (41) in einen geeigneten Sitz eingelegt oder geschraubt ist.

8. Selbsttätiges Entlüftungsventil nach Anspruch 3, **dadurch gekennzeichnet, dass** stromauf von der Aussparung, welche die Ringdichtung (23) aufnimmt, die Luftexpansionskammer (53) vorgesehen ist, die in der Lüftungstülle (35) vorgesehen ist.

9. Selbsttätiges Lüftungsventil nach Anspruch 7, **dadurch gekennzeichnet, dass** das Dichtungselement (23) eine Gummidichtung mit ringförmiger oder flacher Gestalt ist.

10. Selbsttätiges Entlüftungsventil nach einem der Ansprüche 4 bis 8, **dadurch gekennzeichnet, dass** die Nut (29), in die das Dichtungselement (23) eingelegt ist, eine Form, die sich von der Ring- oder Flachform unterscheidet, beispielsweise eine "Schwalbenschwanz"-Form, für ein verbessertes Halten des Dichtungselements unter Hochdruckbedingungen hat.

## Revendications

1. Soupape de purge automatique destinée à des systèmes hydrauliques, particulièrement à des systèmes à grande circulation d'air, comportant essentiellement : un corps extérieur (1) ayant une extrémité filetée supérieure (3) et une extrémité filetée inférieure (7), ledit corps étant fixé audit système par ladite extrémité filetée inférieure (7) ; un flotteur (11) mobile à l'intérieur dudit corps (1) et doté d'une surface inclinée (13) pour agir sur une tige (15) d'un élément de tête de soupape (17) adapté pour ouvrir et fermer automatiquement une ouverture de purge (19), lorsque ledit flotteur (11) est, respectivement, abaissé ou relevé ; un couvercle (5) fixé audit corps par ladite extrémité filetée supérieure (3), un joint d'étanchéité (9) étant interposé entre eux, ledit élément (17) étant repoussé de façon étanche contre un joint torique (23) par un ressort (25) ; un bouchon (27) logé dans ledit couvercle (5) pour permettre un actionnement automatique de ladite soupape de purge lorsque le bouchon est dévissé, et le fonctionnement manuel de la soupape de purge lorsque le bouchon est vissé, **caractérisée en ce que**, en amont de ladite ouverture de purge (19) - un tuyau de décharge (35) est doté d'une chambre de détente d'air (53), et en correspondance avec une partie agrandie (21) dudit élément de soupape (17), ledit tuyau de décharge (35) est pourvu de deux évidements opposés (55) aidant la sortie d'air et de deux guides opposés (56) configurés en forme d'arc de cercle et agissant comme guides pour ladite partie agrandie (21) de l'élément de tête de soupape.

2. Soupape de purge automatique destinée à des systèmes hydrauliques selon la revendication 1, **caractérisée en ce que** l'extrémité inférieure (7) dudit corps (1) est dotée d'un trou calibré (49) destiné à un orifice d'entrée d'air qui communique avec une autre chambre de détente d'air (51).

3. Soupape de purge automatique destinée à des systèmes hydrauliques selon les revendications 1 et/ou 2, **caractérisée en ce que**, en aval dudit joint torique (23), vers ledit bouchon de fermeture (27) - un joint d'étanchéité annulaire (41) est disposé présentant une section transversale configurée sous la forme d'un T horizontal, la tige (43) dudit joint torique (23) présente un trou calibré (45) destiné à permettre le passage de l'air, et ledit bouchon de fermeture (27), lorsqu'il est vissé en vue de la fermeture manuelle - vient en butée contre la tête (47) dudit joint d'étanchéité (41) en aval dudit joint torique (23).

4. Soupape de purge automatique selon la revendication 3, **caractérisée en ce que** ledit joint torique (23) est reçu dans une gorge (29) dudit couvercle (5) et y est maintenu sans aucun moyen de fixation spécifique.

5. Soupape de purge automatique selon la revendication 3, **caractérisée en ce que** l'extrémité dudit tuyau de décharge est dotée d'un rebord faisant saillie vers l'intérieur (33) qui est maté pour empêcher ledit bouchon (27) de sortir dudit tuyau après que ledit bouchon a été desserré pour le fonctionnement automatique de la soupape.

6. Soupape de purge automatique selon la revendication 3, **caractérisée en ce qu'**une pluralité d'ailettes (37) est prévue sur la surface inférieure dudit flotteur (11) en vue d'un meilleur transfert de l'air vers l'ouverture de purge.

7. Soupape de purge automatique selon la revendication 3, **caractérisée en ce que** ledit joint d'étanchéité (41) est inséré ou vissé dans une embase appropriée.

8. Soupape de purge automatique selon la revendication 3, **caractérisée en ce qu'**en amont de l'évidement logeant ledit joint torique (23) est fournie ladite chambre de détente d'air (53) prévue dans le tuyau de décharge (35).

9. Soupape de purge automatique selon la revendication 7, **caractérisée en ce que** ledit élément d'étanchéité (23) est un joint de caoutchouc de configuration torique ou plate.

10. Soupape de purge automatique selon l'une quelconque des revendications 4 à 8, **caractérisée en ce que** la gorge (29) dans laquelle ledit élément d'étanchéité (23) est inséré présente une forme différente d'une forme torique ou plate, par exemple, une configuration en "queue d'aronde", en vue de mieux retenir ledit élément d'étanchéité dans des conditions de pressions élevées.
